Europäisches Patentamt

European Patent Office

Office européen des brevets

(19)

(11) Numéro de publication: **0 004 239**

**B1**

(12)

# FASCICULE DE BREVET EUROPEEN

(21) Numéro de dépôt: **79400146.1**

(22) Date de dépôt: **07.03.79**

(51) Int. Cl.³: **B 65 B 31/02,**
**B 65 B 51/14, A 61 L 2/06**

(54) **Dispositif pour le conditionnement et la conservation sous vide en emballage plastique de produits stérilisés, notamment du linge, dans un autoclave.**

(30) Priorité: **13.03.78 FR 7807107**

(43) Date de publication de la demande:
**19.09.79 Bulletin 79/19**

(45) Mention de la délivrance du brevet:
**25.02.81 Bulletin 81/8**

(84) Etats Contractants Désignés:
**BE CH DE GB IT LU NL SE**

(56) Documents cités:
**FR - A - 1 115 890**
**US - A - 3 925 961**
**US - A - 3 991 543**

(73) Titulaire: **M.A.J., Société à Responsabilité Limitée**
**9, rue du Général Compans**
**F-93507 Pantin (FR)**

(72) Inventeur: **Orliaguet, Maurice**
**9, rue des Pendants**
**F-94370 Sucy En Brie (FR)**

(72) Inventeur: **Colas, Christian François**
**18, rue Charles Laffite**
**F-92000 Neuilly Sur Seine (FR)**

(74) Mandataire: **Roger-Petit, Jean-Camille et al,**
**OFFICE BLETRY 2, Boulevard de Strasbourg**
**F-75010 Paris (FR)**

Courier Press, Leamington Spa, England.

## Dispositif pour le conditionnement et la conservation sous vide en emballage plastique de produits stérilisés, notamment du linge, dans un autoclave

La présente invention concerne un dispositif pour le conditionnement et la conservation sous vide en emballage plastique de produits stérilisés, notamment du linge, dans un autoclave, comprenant au moins un casier-support, une pluralité de barres parallèles supportées le casier-support, des emballages en forme de sacs en matière plastique imperméables à l'air ouverts à une extrémité, des moyens pour supporter les emballages dans le casier-support de façon telle que l'extrémité ouverte de chaque emballage se trouve entre deux barres adjacentes de ladite pluralité de barres parallèles, et des organes de compression et de scellement des extrémités ouvertes des emballages, qui sont fixés auxdites barres parallèles.

Un dispositif de ce genre est par exemple décrit dans le brevet américain n° 3 925 961. Bien que le dispositif décrit dans ce brevet américain fonctionne de manière irréprochable, il présente néanmoins quelques inconvénients. En particulier, après que les produits ont été stérilisés et conditionnés sous vide en emballage plastique dans l'autoclave et après que le casier-support a été sorti de l'autoclave, il est nécessaire d'attendre 15 à 20 minutes avant de pouvoir manipuler les sacs en plastique contenant les produits stérilisés. En effet, à leur sortie de l'autoclave, les sacs en plastique sont encore à une température relativement élevée. A cette température, la matière plastique constituant les sacs est cassante et il est nécessaire d'attendre que les sacs soient revenus à la température ambiante avant qu'on puisse les manipuler sans risquer de les crever et de détruire le vide à l'intérieur des sacs. En conséquence, le casier-support reste immobilisé pendant un temps qui représente à peu près 30% de la durée totale du cycle de stérilisation et de conditionnement. Afin de réduire la durée totale de ce cycle, on pourrait utiliser en alternance deux casiers-supports, l'un des deux casiers-support étant chargé de sacs en plastique contenant les produits à stériliser pendant que l'autre casier-support se trouve dans l'autoclave, et étant introduit dans l'autoclave aussitôt après que l'autre casier-support a été extrait de l'autoclave. Toutefois, de tels casiers-supports sont des éléments relativement coûteux. Comme l'autoclave peut en général contenir au moins deux casiers-supports en même temps, il faudrait donc prévoir au moins deux autres casiers-supports, ce qui augmenterait très sensiblement le coût de l'installation de stérilisation et de conditionnement.

En outre, le casier-support décrit dans ce brevet américain comporte un grand nombre d'éléments mobiles qui sont exposés à la chaleur et à la vapeur d'eau dans l'autoclave. Notamment, les barres supportant les organes de compression et de scellement ne sont pas fixées rigidement à la structure du casier-support, mais sont montées sur des galets pour pouvoir être écartées les unes des autres afin de permettre la mise en place et le retrait des sacs en plastique dans des paniers. Ces paniers et les barres sont eux-mêmes reliés entre eux par deux systèmes de bras croisés et articulés formant accordéon. Etant donné les rudes conditions auxquelles ces éléments sont soumis à l'intérieur de l'autoclave, le casier-support nécessite une maintenance importante.

Enfin, les sacs en matière plastique contenant les produits à stériliser sont supportés en position verticale dans les paniers du casier-support. Il en résulte que les sacs et les produits qu'ils contiennent ont tendance à s'affaisser vers le bas et à prendre des formes très irrégulières au lieu de garder une forme sensiblement plane. Cette déformation des sacs nuit à l'aspect du produit fini et, comme les sacs contenant le produit sous vide sont relativement rigides, il devient difficile de les empiler en vue de leur stockage.

La présente invention a essentiellement pour but de remédier aux inconvénients susmentionnés en fournissant une nouvelle structure du casier-support.

A cet effet, le dispositif selon la présente invention est caractérisé en ce que les barres parallèles sont fixées rigidement au casier-support de façon à former, entre les organes de compression et de scellement adjacents, des fentes de largeur prédéterminée ouvertes au moins à une de leurs extrémités, et en ce que lesdits moyens de support des emballages comprennent au moins un casier auxiliaire parallèlépipédique pouvant être introduit et extrait du casier-support principal dans une direction parallèle à la direction longitudinale desdites fentes du côté des extrémités ouvertes de celle-ci.

Grâce à un tel agencement, aussitôt après que le casier-support principal a été extrait de l'autoclave, le ou les casiers auxiliaires supportant les sacs en plastique contenant les produits qui viennent d'être stérilisés peuvent être extraits du casier-support principal sans dommage pour les sacs, et être remplacés par d'autres casiers auxiliaires préalablement chargés avec des sacs contenant des produits à stériliser. Il en résulte que le casier-support principal peut être immédiatement réintroduit dans l'autoclave pour le cycle suivant de stérilisation et de conditionnement sous vide. Pendant ce cycle suivant, on laisse refroidir pendant le temps nécessaire les sacs contenant les produits qui ont été stérilisés au cours du cycle précédent, puis on les retire du ou des casiers auxiliaires et on les remplace par d'autres sacs contenant des produits à stériliser, de telle façon que le ou les casiers auxiliaires soient prêts à être introduits dans le casier-support principal pour un cycle ultérieur de stérilisation et de conditionnement. Il n'y a ainsi aucune perte de temps. Les casiers auxiliaires peuvent être réalisés de manière très simple à partir de tiges métalliques soudées. Ils sont donc peu coûteux, si bien que le fait de prévoir des casiers additionnels auxiliaires n'augmente pas sensiblement le prix de l'installation, de stérilisation et de conditionnement.

En outre, suivant une forme préférée d'exécution de la présente invention, les barres parallèles supportant les organes de compression et de scellement peuvent être fixées de façon à s'étendre horizontalement les unes au-dessous des autres sur deux côtés verticaux opposés du casier-support principal, et le ou les casiers auxiliaires peuvent être agencés pour supporter les sacs en plastique en position horizontale. On évite ainsi l'affaissement ou le tassement des sacs en plastique et des produits contenus dans ceux-ci, qui a lieu lorsque les sacs sont supportés en position verticale.

On donnera maintenant une description détaillée de la présente invention en faisant référence aux dessins annexés sur lesquels:

La figure 1 est une vue en perspective d'un autoclave prêt à recevoir un casier-support principal chargé par exemple d'articles de linge insérés dans leurs emballages individuels et empilés dans deux casiers auxiliaires.

La figure 2 est une vue en perspective du casier-support principal représenté sur la figure 1, certains éléments ayant toutefois été retirés pour plus de clarté de la figure.

La figure 3 est une vue en élévation de face du casier-support principal représenté sur la figure 2.

La figure 4 est une vue schématique en élévation de côté du casier-support principal représenté sur les figures 2 et 3, cette figure 4 montrant également une partie du chariot supportant le casier-support principal, ainsi que deux casiers auxiliaires prêts à être introduits dans le casier-support principal.

La figure 5 est une vue de dessus correspondant à la figure 4, excepté que les casiers auxiliaires ont été représentés en trait mixte à l'intérieur du casier-support principal.

La figure 6 est une vue en perspective montrant un casier auxiliaire en cours de chargement dans le casier-support principal.

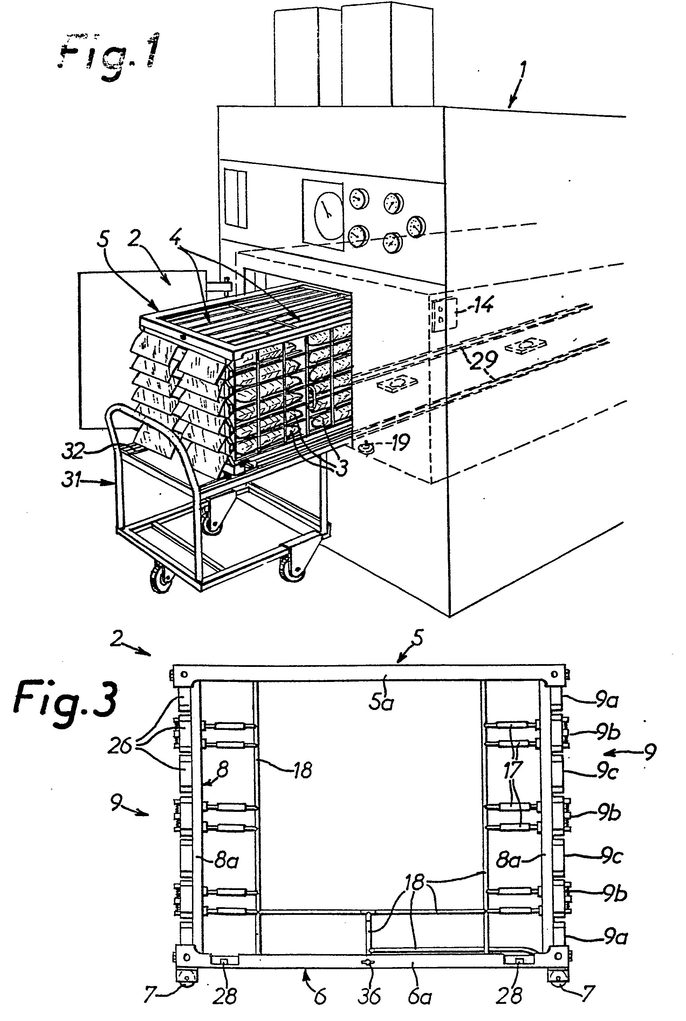

La figure 1 montre un autoclave 1 prêt à recevoir un casier-support 2 chargé d'articles de linge insérés dans leurs emballages individuels 3 qui sont empilés dans deux casiers auxiliaires 4.

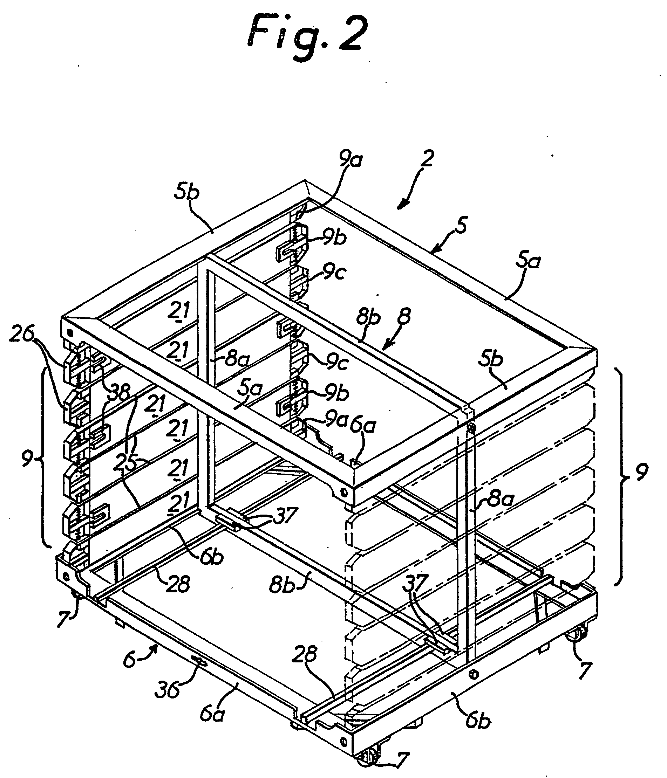

Comme cela est plus particulièrement visible sur la figure 2, le casier-support principal 2 a une ossature comprenant un cadre rectangulaire horizontal supérieur 5, un cadre rectangulaire horizontal inférieur 6 pourvu de roulettes 7 pour l'introduction du casier-support principal 2 dans l'autoclave 1, et un unique cadre rectangulaire vertical 8. Chacun des deux cadres 5 et 6 comprend deux côtés longitudinaux 5a et 6a, respectivement, et deux côtés transversaux 5b et 6b, respectivement, qui sont constitués par des profilés métalliques à section en L. Le cadre 8 est formé de deux montants verticaux 8a et de deux traverses horizontales 8b qui entretoisent les côtés transversaux 5b et 6b des cadres 5 et 6 en leur milieu.

Deux groupes de barres parallèles 9 sont fixés rigidement sur deux côtés verticaux opposés du casier-support principal 2. Plus précisément, les barres 9 de chaque groupe s'étendent parallèlement aux côtés transversaux 5b et 6b des cadres supérieur et inférieur 5 et 6, ont sensiblement le même longueur que ces côtés 5b et 6b, et sont fixées en leur milieu l'une au-dessous de l'autre, à l'un des deux montants verticaux 8a du cadre vertical 8.

Chaque groupe de barres parallèles 9 comporte deux barres d'extrémité supérieure et inférieure 9a et, entre celles - ci des barres 9b et 9c disposées en alternance. Chaque barre 9c porte, de chaque côté, des organes de scellement 11, tandis que chaque barre 9b porte, de chaque côté, des organes de compression 12, chaque organe de compression 12 étant disposé en regard d'un organe de scellement 11, comme cela est montré sur la figure 6. Chacune des deux barres d'extrémité 9a porte un organe de scellement 11 seulement d'un côté.

Les organes de scellement 11 peuvent être par exemple constitués par des résistances électriques chauffantes montées sur des supports isolants qui sont fixés rigidement aux barres 9a et 9c. Les résistances électriques chauffantes son alimentées en courant par des conducteurs 13 reliés à un circuit d'alimentation (non montré) qui est commun à toutes les résistances électriques chauffantes et qui est porté par le cadre vertical 8. Ce circuit d'alimentation peut lui-même être raccordé, par un câble souple d'alimentation, à une prise de courant 14 située à l'intérieur de l'autoclave 1 (figure 1) après que le casier-support principal 2 a été introduit dans ledit autoclave.

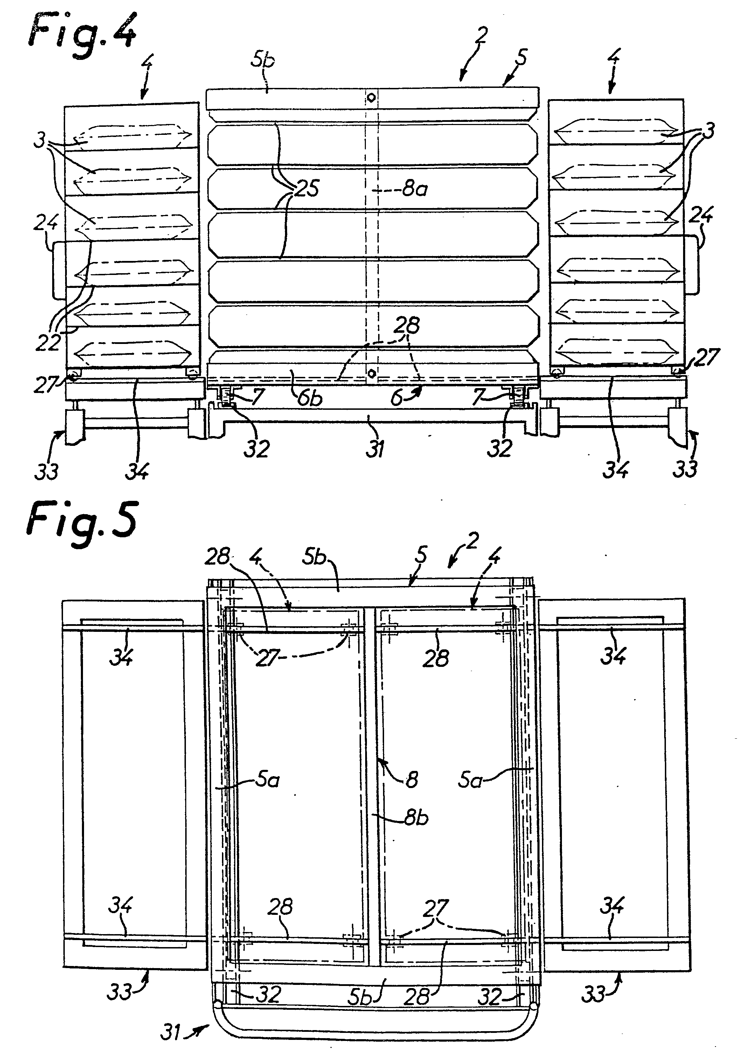

Chaque organe de compression 12 peut être par exemple constitué par une plaque de pression qui est normalement maintenue écartée de la résistance électrique chauffante adjacente 11 par des ressorts 15 et qui peut être pressée contre ladite résistance électrique par un organe d'actionnement 16. Cet organe d'actionnement 16 peut être par exemple constitué par un joint gonflable analogue à celui décrit dans le brevet américain 3 925 961. Chaque joint gonflable 16 est raccordé par un raccord 17 (figure 3) à un circuit d'alimentation en air comprimé 18 qui peut être lui-même raccordé, par une conduite souple (non montrée) à une prise d'air comprimé 19 qui se trouve à l'intérieur de l'autoclave 1 (figure 1), après que le casier-support principal 2 a été introduit dans ledit autoclave.

Des plaques protectrices intérieures et extérieures 21 (figures 2 et 6) sont fixées aux barres 9a, 9b et 9c. Au moins, les plaques extérieures 21 sont fixées de manière amovible, de telle façon que l'on puisse avoir facilement accès aux organes de scellement 11 et aux organes de compression 12 après démontage de ces plaques.

Les emballages individuels 3 contenant les articles de linge à stériliser sont constitués, de façon connue, par des sacs en matière plastique imperméables à l'air ouverts à une extrémité. Les sacs 3 sont disposés horizontalement sur des claies 22 prévues dans les casiers auxiliaires 4. Chaque casier auxiliaire 4 a sensiblement la forme d'un parallélépipède ayant une longueur, une largeur et une hauteur qui sont légèrement plus petites que, respectivement, la longueur des côtés longitudinaux 5a et 6a des cadres 5 et 6, la moitié de la longueur des côtés transversaux 5b et 6b desdits cadres et la longueur des montants 8a du cadre vertical 8. Ainsi, chaque casier auxiliaire 4 occupe sensiblement la moitié du volume intérieur du casier support principal 2 lorsqu'il est introduit à l'intérieur de ce dernier. Chaque casier auxiliaire 4, y compris ses claies 22, peut être réalisé à partir de tiges métalliques soudées comme montré notamment sur la figure 6. Une cloison métallique verticale 23 peut être prévue au milieu de chaque casier 4 pour le renforcer et servir de support intermédiaire pour les claies 22. Chaque casier auxiliaire 4 est en outre muni d'une poignée de préhension 24.

Comme cela a été indiqué plus haut, les barres parallèles 9 sont fixées uniquement en leur milieu aux montants 8a du cadre vertical 8. Il en résulte que des fentes 25 de largeur prédéterminée ouvertes à leurs deux extrémités, sont formées entre les organes de compression 12 et les organes adjacents de scellement 11, comme cela est notamment visible sur les figures 2, 4 et 6. Les sacs 3 sont disposés horizontalement sur les claies 22 des casiers auxiliaires 4. Chaque claie 22 supporte deux sacs 3 alignés dans le sens de la longueur du casier auxiliaire 4 et disposés de telle façon que leurs extrémités ouvertes 3a soient orientées dans des directions opposées et fassent saillie au-delà des faces d'extrémité du casier auxiliaire 4, respectivement, pour pouvoir être engagées dans des fentes respectives 25 des deux groupes de barres parallèles 9, à travers les extrémités ouvertes des fentes 25, lors de l'introduction du casier auxiliaire 4 dans le casier support principal 2, comme montré sur la figure 6. Aux deux extrémités de chaque barre 9 sont fixés des organes de guidage 26 conformés de manière à réaliser, par paires, une entrée évasée pour faciliter l'introduction des extrémités ouvertes 3a des sacs 3 dans les fentes 25.

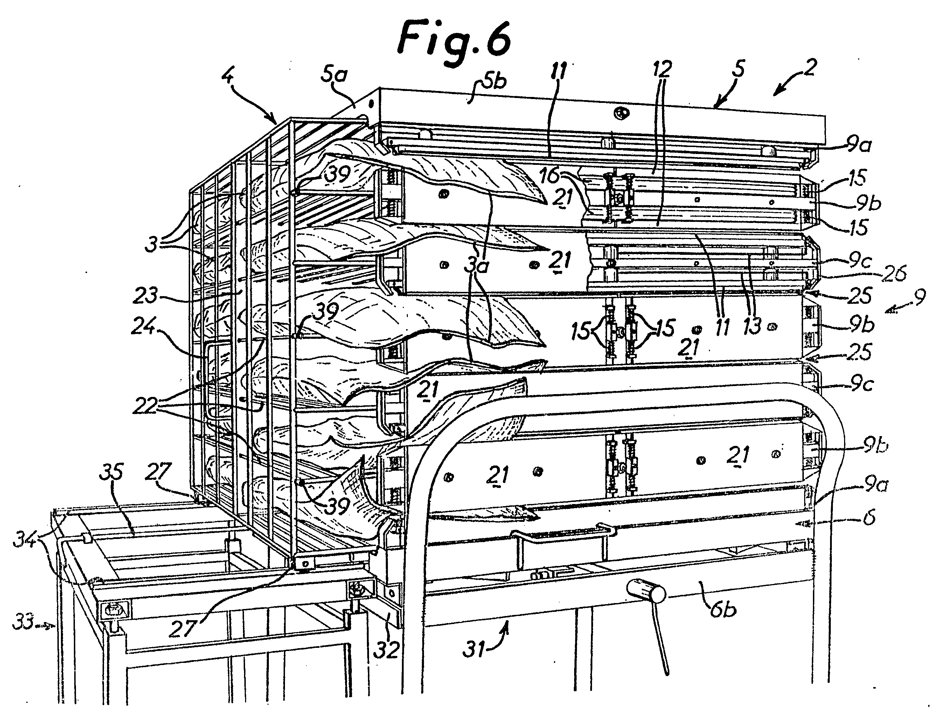

Chaque casier auxiliaire 4 est monté sur quatre roulettes 27 (figures 4, 5 et 6) et le cadre inférieur 6 du casier-support principal 2 est pourvu de rails parallèles et horizontaux 28 (figures 3 à 5), qui s'étendent parallèlement aux côtés transversaux 6b du cadre 6, pour recevoir et guider les casiers auxiliaires 4. Ainsi, les casiers auxiliaires 4 peuvent être introduits et extraits du casier support principal 2 dans une direction parallèle à la direction longitudinale des fentes 25 formées entre les barres parallèles 9.

Comme montré sur la figure 1, l'entrée de l'autoclave 1 se trouve à une certaine hauteur au-dessus du sol, et il est prévu, à l'intérieur dudit autoclave, des rails parallèles et horizontaux 29 pour recevoir et guider le casier-support principal 2 dans l'autoclave 1. Un chariot 31 (figures 1, 4, 5 et 6) est pourvu de rails parallèles et horizontaux 32 pouvant être alignés avec les rails 29 de l'autoclave 1 pour recevoir et guider le casier-support principal 2 à la hauteur de l'entrée de l'autoclave. Ainsi, le casier-support principal 2 peut être facilement amené depuis un poste de chargement des casiers auxiliaires 4 jusqu'à l'entrée de l'autoclave 1 pour y être introduit et vice versa, depuis l'autoclave 1 jusqu'à un poste de déchargement des casiers auxiliaires 4.

Au poste de chargement ou de déchargement des casiers auxiliaires 4, il est prévu deux supports auxiliaires fixes 33 (figures 4, 5 et 6) qui sont pourvus de rails parallèles et horizontaux 34 capables d'être alignés avec les rails 28 du cadre inférieur 6 du casier-support principal 2 lorsque celui-ci est placé sur le chariot 31. Chaque support fixe 33 comporte une tige d'accouplement 35 (figure 6) qui peut être engagée et verrouillée dans une ouverture 36 (figures 2 et 3) formée dans le cadre inférieur 6 du casier-support principal 2 afin de maintenir les rails 34 dans l'alignement des rails 28.

Comme montré sur la figure 2, des buttoirs 37 fixés sur la traverse horizontale inférieure 8b du cadre vertical 8 permettent de limiter la pénétration des casiers auxiliaires 4 à l'intérieur du casier-support principal 2. En outre, au moins certaines des barres parallèles 9 portent, à leurs extrémités où les fentes 25 formées entre les organes de compression 12 et les organes de scellement 11 sont ouvertes, des pièces 38 en U capables de recevoir des tenons 39 (figure 6) qui sont solidaires des casiers auxiliaires 4, afin de rigidifier la structure de l'ensemble et de maintenir, en service, un écartement constant entre les barres parallèles 9.

Au poste de déchargement, les deux casiers auxiliaires 4 peuvent être extraits du casier-support principal 2 après un cycle de stérilisation et de conditionnement, et ils peuvent être laissés sur les supports auxiliaires fixes 33 ou être transférés de ces supports 33 á un autre lieu afin de laisser les sacs 3 se refroidir. Au poste de chargement, qui peut être le même poste que le poste de déchargement ou un autre poste, deux autres casiers auxiliaires 4 préalablement chargés de sacs 3 contenant des articles de linge à stériliser sont introduits dans le casier-support principal 2 à la place des deux casiers auxiliaires 3 qui viennent d'être extraits. Ainsi, il est possible de réintroduire, sans perte de temps, le casier-support auxiliaire 2 a l'intérieure de l'autoclave 1 pour un nouveau cycle de stérilisation et de conditionnement. Il en résulte donc un gain de temps appréciable, puisqu'il n'est plus nécessaire d'attendre que les sacs 3 se refroidissent pour recharger le casier-support principal 2 et le réintroduire dans l'autoclave 1.

En outre, étant donné que les sacs 3 sont supportés horizontalement, ces sacs 3 et les produits qu'ils contiennent n'ont pas tendance à s'affaisser, de sorte qu'ils conservent, après stérilisation et conditionnement sous vide, une forme générale plane facilitant leur empilage dans un lieu de stockage. On remarquera en outre que tous les organes du casier-support principal 2 sont facilement accessibles, ce qui facilite leur maintenance. Un autre avantage du casier-support principal 2 selon la présente invention réside en ce qu'il a une capacité plus grande que le casier-support décrit dans le brevet américain n° 3 925 961. En effet, à dimensions égales, le casier-support décrit dans ce brevet américain peut contenir vingt sacs, alors que le casier-support 2 selon la présente invention peut en contenir 24, soit une augmentation de 20% de la capacité.

Dans ce qui précède on a décrit une forme préférée d'exécution de la présente invention. Toutefois, les barres parallèles 9 et les casiers auxiliaires 4 pourraient être agencés de manière différente. En effet, l'important est que les barres parallèles 9 soient fixées rigidement au casier-support de façon à former entre les organes de compression 12 et les organes adjacents de scellement 11 des fentes 25 de largeur prédéterminée ouvertes au moins à une de leurs extrémités, et que le ou les casiers auxiliaires puissent être introduits et extraits du casier-support principal 2 dans une direction parallèle à la direction longitudinale des fentes 25 du côté des extrémités ouvertes de celles-ci. En outre, si l'on a prévu un chariot 31 et des supports fixes 33, c'est uniquement parce que l'entrée de l'autoclave 1 est située à une certaine hauteur au-dessus du sol. Il est bien évident que, si cette entrée se trouvait à la hauteur du sol, on pourrait se passer du chariot 31 et des deux supports 33, les rails 32 et 34 pouvant être alors supportés directement par le sol.

Il est du reste bien entendu que la forme d'exécution de l'invention qui a été décrite ci-dessus, a été donnée à titre d'exemple purement indicatif et nullement limitatif, et que de nombreuses modifications peuvent être apportées sans pour autant sortir du cadre de la présente invention.

## Revendications

1. Dispositif pour le conditionnement et la conservation sous vide en emballage plastique de produits stérilises, notamment du linge, dans un autoclave (1), comprenant au moins un casier-support (2), une pluralité de barres parallèles (9) supportées par le casier-support (2), des emballages (3) en forme de sacs en matière plastique imperméable à l'air ouverts à une extrémité (3a), des moyens pour supporter les emballages (3) dans le casier-support (2) de telle façon que l'extrémité ouverte (3a) de chaque emballage (3) se trouve entre deux barres adjacentes de ladite pluralité. de barres parallèles (9), et des organes de compression (12) et de scellement (11) des extrémités ouvertes (3a) des emballages (3), qui sont fixés auxdites barres parallèles (9), caractérisé en ce que les barres parallèles (9) sont fixées rigidement au casier-support (2) de façon à former entre les organes de compression (12) et de scellement (11) adjacents des fentes (25) de largeur prédéterminée ouvertes au moins à une de leurs extrémités, et en ce que lesdits moyens de support des emballages (3) comprennent au moins un casier auxiliaire parallélépipédique (4) pouvant être introduit et extrait du casier-support principal (2) dans une direction parallèle à la direction longitudinale desdites fentes (25) du côté des extrémités ouvertes de celles-ci.

2. Dispositif selon la revendication 1, dans lequel le casier-support principal (2) comprend un cadre rectangulaire horizontal supérieur (5) et un cadre rectangulaire horizontal inférieur (6) pourvu de roulettes (7) pour l'introduction du casier-support principal (2) dans l'autoclave (1), chacun des deux cadres horizontaux supérieur (5) et inférieur (6) ayant deux côtés longitudinaux (5a, 6a) et deux côtés transversaux (5b, 6b), caractérisé en ce que le casier-support (2) comporte en outre un unique cadre rectangulaire vertical (8) formé de deux montants verticaux 8a et de deux traverses horizontales (8b) quie entretoisent les côtés transversaux (5b, 6b) des cadres supérieur et inférieur (5, 6) en leur milieu, et en ce que ladite pluralité de barres parallèles (9) comprend deux groupes de barres, les barres de chaque groupe s'étendant parallèlement aux côtes transversaux (5b, 6b) des cadres supérieur et inférieur (5, 6) ayant sensiblement la même longueur que lesdits côtés transversaux et étant fixées en leur milieu, l'une au-dessous de l'autre, à l'un des deux montants verticaux (8a) du cadre vertical (8).

3. Dispositif selon la revendication 2, caractérisé en ce qu'il comporte deux casiers auxiliaires parallélépipédiques (4) chaque casier auxiliaire ayant une longueur, une largeur et une hauteur qui sont légèrement plus petites que, respectivement, la longueur des côtés longitudinaux (5a, 6a) des cadres supérieur et inférieur (5, 6) la moitié de la longueur des côtés transversaux (5b, 6b) desdits cadres supérieur et inférieur et la longueur des montants (8a) du cadre vertical (8), et ayant plusieurs claies (22) disposées horizontalement l'une au-dessous de l'autre pour supporter les emballages (3).

4. Dispositif selon la revendication 3, caractérisé en ce que les emballages (3) sont disposés horizontalement sur les claies (22) des casiers auxiliaires (4), chaque claie supportant deux emballages (3) alignés dans le sens de la longueur du casier auxiliaire (4) et disposés de telle façon que leurs extrémités ouvertes soient orientées dans des directions opposées et fassant respectivement saillie au-delà des faces d'extrémité du casier auxiliaire.

5. Dispositif selon la revendication 4, caractérisé en ce que chaque casier auxiliaire (4) est monté sur des roulettes (27) et en ce que le cadre horizontal inférieur (6) du casier-support principal (2) est pourvu de rails parallèles et horizontaux (28), qui s'étendent parallèlement aux côtés transversaux (5b) du cadre inférieur (5) pour recevoir et guider les casiers auxiliaires (4).

6. Dispositif selon la revendication 5, comprenant, dans l'autoclave (1), des rails parallèles et horizontaux (29) pour recevoir et guider le casier-support principal (2), et un chariot (31) pourvu de rails parallèles et horizontaux (32) pouvant être alignés avec ceux de l'autoclave pour recevoir et guider le casier-support principal à la hauteur de l'entrée de l'autoclave, caractérisé en ce qu'il comporte en outre deux châssis fixes (33) pourvus de rails parallèles et horizontaux (34) capables d'être alignés avec ceux du cadre inférieur (6) de casier-support principal (2) lorsque celui ci est placé sur le chariot (31), pour recevoir les casiers auxiliaires (4).

7. Dispositif selon l'une quelconque des revendications 1 à 6, caractérisé en ce qu'au moins certaines des barres parallèles (9) portent, à leurs extrémités où les fentes (25) formées entre les organes de compression (12) et de scellement (11) sont ouvertes, des pièces (38) en U capables de recevoir des tenons (39) solidaires des casiers auxiliaires (4).

8. Dispositif selon l'une quelconque des revendications 2 à 7, caractérisé en ce que le cadre vertical (8) du casier-support principal (2), supporte des circuits d'alimentation en air comprimé (32) et en électricité qui sont reliés auxdits organes de compression (12) et de scellement (11) et qui peuvent être raccordés à des moyens de branchement (19, 14) prévus de façon connue dans l'autoclave (1).

**Claims**

1. Apparatus for the conditioning and preservation under vacuum in a plastics package of sterilised goods, particularly of linen, in an autoclave (1), comprising at least one set of support shelves, a plurality of parallel bars (9) supported by the set of shelves, packagings (3) in the form of bags of plastics material impermeable to air open at one extremity (3a), means for supporting the packagings (3) in the set of shelves (2) in such a manner that the open end (3a) of each packaging (3) is placed between two adjacent bars of the said plurality of parallel bars (9), and means for compressing (12) and sealing (11) of the open ends (3a) of the packagings (3), which are fixed to the said parallel bars (9), characterised in that the parallel bars (9) are fixed rigidly to the set of shelves (2) in such a manner as to form between the adjacent means for compression (12) and sealing (11) openings (25) of predetermined width open at least at one of their extremities, and in that the said means of support of the packagings (3) comprise at least one auxiliary parallelepipedal set of shelves (4) which can be introduced into and withdrawn from the principal set of shelves (2) in a direction parallel to the longitudinal direction of the said openings (25) at the open ends of these latter.

2. Apparatus, according to Claim 1, in which the principal set of support shelves (2) comprises an upper horizontal rectangular frame (5) and a lower horizontal rectangular frame (6) provided with wheels (7) for the introduction of the principal set of support shelves (2) into the autoclave (1), each of the two horizontal frames, upper (5) and lower (6) having two longitudinal sides (5a, 6a) and two transverse sides (5b, 6b) characterised in that the set of support shelves (2) further comprises a single vertical rectangular frame (8) formed of two vertical risers (8a) and two horizontal crossmembers (8b) which brace the transverse sides (5b, 6b) of the upper and lower frames (5, 6) at their centre, and in that the said plurality of parallel bars (9) comprise two groups of bars, the bars of each group extending parallel to the transverse sides (5b, 6b) of the upper and lower frames (5, 6) having substantially the same length as the said transverse sides and being fixed at their centre, one below the other, to one of the two vertical risers (8a) of the vertical frame (8).

3. Apparatus, according to Claim 2, characterised in that it comprises two auxiliary parallelepipedal sets of shelves (4), each auxiliary set having a length, a width and a height which are slightly less, respectively, than the length of the longitudinal sides (5a, 6a) of the upper and lower frames (5, 6), the half of the length of the transverse sides (5b, 6b) of the said upper and lower frames and the length of the risers (8a) of the vertical frame (8), and having several shelves (22) disposed horizontally one below the other to support the packagings (3).

4. Apparatus according to Claim 3, characterised in that the packagings (3) are disposed horizontally on the shelves (22) of the auxiliary sets of shelves (4), each shelf supporting two packagings (3) aligned in the direction of the length of the auxiliary set (4) and disposed in such a manner that their open ends are orientated in opposite directions and respectively project beyond the end faces of the auxiliary set of shelves.

5. Apparatus according to Claim 4, characterised in that each auxiliary set of shelves (4) is mounted on wheels (27) and in that the lower horizontal frame (6) of the principal set of support shelves (2) is provided with parallel horizontal rails (28) which extend parallel to the transverse sides (5b) of the lower frame (5), to receive and guide the auxiliary sets of shelves (4).

6. Apparatus according to Claim 5, comprising, in the autoclave (1), parallel and horizontal rails (29) to receive and guide the principal set of support shelves (2), and a carriage (31) provided with parallel and horizontal rails (32) which can be aligned with those of the autoclave to receive and guide the principal set of shelves to the height of the entrance of the autoclave, characterised in that it further comprises two fixed chassis (33) provided with parallel and horizontal rails (34) capable of being aligned with those of the lower frame (6) of the principal set of shelves (2) when the latter is placed on the carriage (31), to receive the auxiliary sets of shelves (4).

7. Apparatus according to any one of Claims 1 to 6, characterised in that at least certain of the parallel bars (9) carry, at their ends where the openings (25) formed between the means of compression (12) and of sealing (11) are open, "U" members (38) capable of receiving tenons (39) integral with the auxiliary sets of shelves (4).

8. Apparatus, according to any one of Claims 2 to 7, characterised in that the vertical frame (8) of the principal set of shelves (2), supports circuits for feeding compressed air (32) and electricity which are coupled to the said means for compression (12) and for sealing (11) and which can be coupled to supply points (19, 14) provided in known manner in the autoclave (1).

**Patentansprüche**

1. Vorrichtung zum unter Vakuum in Kunststoffverpackung erfolgendem Konditionieren und Konservieren von sterilisierten Produkten, insbesondere von Wäsche, in einem Autoklav (1), mit mindestens einem Tragregal (2), mit einer Mehrzahl von parallelen Stäben (9), die vom Tragregal (2) getragen werden, mit Vorpackungen (3) in Form von Säcken aus luftundurchlässigem Kunststoff, die an einem Ende (3a) geöffnet sind, mit Einrichtungen zum Tragen der Verpackungen (3) im Tragregal (2) derart, daß das offene Ende (3a) jeder Verpackung zwischen zwei benachbarten Stäben aus der Vielzahl der parallelen Stäbe (9) liegt, und mit für die offenen Enden (3a) der Verpackungen (3) vorgesehenen Druckelementen (12) und Siegelelementen (11), die an den parallelen Stäben (9) angeordnet sind, dadurch gekennzeichnet, daß die parallelen Stäbe (9) starr an dem Tragregal (2) befestigt sind, so daß sie zwischen den benachbarten Druckelementen (12) und Siegelelementen (11) Schlitze (25) von vorbestimmter Breite bilden, die an mindestens einem ihrer Enden offen sind, und daß die Einrichtungen zum Tragen der Verpackungen (3) mindestens ein quaderförmiges Hilfsregal (4) umfassen, das in einer Richtung parallel zur Längsrichtung der Schlitze (25) in das Haupt-Tragregal (2) einsetzbar und aus ihm entnehmbar ist, und zwar an der Seite der offenen Enden der Schlitze.

2. Vorrichtung nach Anspruch 1, bei der das Haupt-Tragregal (2) einen rechtwinkligen horizontalen oberen Rahmen (5) und einen rechtwinkligen horizontalen unteren Rahmen (6) mit rollen (7) zum Einführen des Haupt-Tragregals (2) in den Autoklav (1) aufweist, wobei jeder der beiden horizontalen oberen und unteren Rahmen (5, 6) zwei Längskanten (5a, 6a) und zwei Querkanten (5b, 6b) besitzt, dadurch gekennzeichnet, daß das Tragregal (2) ferner einen einzigen rechtwinkligen vertikalen Rahmen (8) umfaßt, der aus zwei vertikalen Ständern (8a) und aus zwei horizontalen Traversen (8b) besteht, welche die Querkanten (5b, 6b) der oberen und unteren Rahmen (5, 6) in deren Mitte miteinander verstreben, und daß die Mehrzahl der parallelen stäbe (9) zwei Gruppen von Stäben umfaßt, wobei sich die Stäbe jeder Gruppe parallel zu den Querkanten (5b, 6b) der oberen und unteren Rahmen (5, 6) erstrecken und im wesentlichen die gleiche Länge wie diese Querkanten aufweisen sowie in ihrer Mitte, einer unterhalb des anderen, an einem der beiden vertikalen Ständer (8a) des vertikalen Rahmens (8) befestigt sind.

3. Vorrichtung nach Anspruch 2, dadurch gekennzeichnet, daß zwei quaderförmige Hilfsregale (4) vorgesehen sind, von denen jedes eine Länge, eine Breite und eine Höhe aufweist, die jeweils etwas geringer sind als die Länge der Längskanten (5a, 6a) der oberen und unteren Rahmen (5, 6), die halbe Länge der Querkanten (5b, 6b) dieser oberen und unteren Rahmen und die Länge der Ständer (8a) des vertikalen Rahmens (8), wobei jedes Hilfsregal eine Mehrzahl von Horden (22) enthält, die horizontal eine unterhalb der anderen zum Tragen der Verpackungen (3) angeordnet sind.

4. Vorrichtung nach Anspruch 3, dadurch gekennzeichnet, daß die Verpackungen (3) horizontal auf den Horden (22) der Hilfsregale (4) angeordnet sind, wobei jede Horde zwei Verpackungen (3) trägt, die in Längsrichtung des Hilfsregals (4) fluchten und derart angeordnet sind, daß ihre offenen Enden in entgegengesetzte Richtungen weisen und jeweils über die Außenfläche des Hilfsregals vorspringen.

5. Vorrichtung nach Anspruch 4, dadurch gekennzeichnet, daß jedes Hilfsregal (4) auf Rollen (27) angeordnet ist und daß der horizontale untere Rahmen (6) des Haupt-Tragregals (2) mit parallelen und horizontalen Schienen (28) versehen ist, die sich parallel zu den Querkanten (5b) des unteren Rahmens (5) erstrecken und dazu dienen, die Hilfsregale (4) aufzunehmen und zu führen.

6. Vorrichtung nach Anspruch 5 mit parallelen und horizontalen Schienen (29) innerhalb des Autoklaven (1) zum Aufnehmen und Führen des Haupt-Tragregals (2) und mit einem Wagen (31), der mit parallelen und horizontalen Schienen (32) versehen ist, welche mit denen des Autoklaven zum Fluchten gebracht werden können, um das Haupt-Tragregal auf der Höhe des Einlasses des Autoklaven aufzunehmen und zu führen, dadurch gekennzeichnet, daß ferner zwei stationäre Rahmen (33) vorgesehen sind, die parallele und horizontale Schienen (34) tragen, welche mit denen des unteren Rahmens (6) des Haupt-Tragregals (2), sofern letzteres auf den Wagen (31) aufgesetzt ist, zum Fluchten gebracht werden können, um die Hilfsregale (4) aufzunehemen.

7. Vorrichtung nach einem der Ansprüche 1 bis 6, dadurch gekennzeichnet, daß mindestens bestimmte der parallelen Stäbe (9) an ihren Enden, an denen die zwischen den Druckelementen (12) und den Siegelelementen (11) gebildeten Schlitze (25) offen sind. U-formige Teile (38) tragen, die Zapfen (39) aufnehemen können, welche mit den Hilfsregalen (4) verbunden sind.

8. Vorrichtung nach einem der Ansprüche 2 bis 7, dadurch gekennzeichnet, daß der vertikale Rahmen (8) des Haupt-Tragregals (2) Versorgungskreise (32) für Druckluft und elektrischen Strom trägt, die mit den Druckelementen (12) und den Siegelelementen (11) in Verbindung stehen sowie mit Anschlüssen (19, 14) verindbar sind, welche sich in an sich bekannter Weise innerhalb des Autoklaven (1) befinden.

Fig.1

Fig.3

# Fig. 2

**Fig.4**

**Fig.5**

**Fig.6**